# EUROPEAN PATENT APPLICATION

(11) **EP 4 664 975 A1**
(43) Date of publication of application: **17.12.2025**
(21) Application number: 23921054.5
(22) Date of filing: 07.02.2023
(51) Int. Cl.: H04W 24/10

(54) **BASE STATION DEVICE, TERMINAL DEVICE, AND WIRELESS COMMUNICATION SYSTEM**

(71) Applicant: FUJITSU LIMITED, Kawasaki-shi, Kanagawa 211-8588 (JP)
(72) Inventor: CHENG Huiting, Kawasaki-shi, Kanagawa 211-8588 (JP); SHIMOMURA Tsuyoshi, Kawasaki-shi, Kanagawa 211-8588 (JP); HORI Takako, Kawasaki-shi, Kanagawa 211-8588 (JP); UEMURA Katsunari, Kawasaki-shi, Kanagawa 211-8588 (JP)
(74) Representative: Haseltine Lake Kempner LLP
(86) International application number: PCT/JP2023/004056
(87) International publication number: WO 2024/166222

(57) **Abstract**

A base station device that transmits a plurality of reference signals to a terminal device and receives measurement results of the plurality of reference signals from the terminal device, the base station device includes, a controller that notifies the terminal device of transmission information related to transmission of the plurality of reference signals, and a communicator that receives, from the terminal device, some or all of measurement results of the plurality of reference signals, the measurement results being transmitted according to a priority order determined based on the transmission information by the terminal device.

## Description

### TECHNICAL FIELD

The present invention relates to a base station device, a terminal device, and a wireless communication system.

### BACKGROUND ART

In recent years, various studies on techniques related to energy saving of base station devices in a wireless communication system have been conducted at international standardization meetings and the like (Non-Patent Literature 28). As techniques related to energy saving of base station devices, techniques for adaptation of spatial elements and adaptation of transmission power have been proposed (Non-Patent Literature 29). The spatial elements include, for example, an element related to transmission and reception of radio waves, such as a wireless transceiver circuit or an antenna. The base station device includes a plurality of wireless transceiver circuits and a plurality of antennas. The base station device can change the number of spatial elements (for example, wireless transceiver circuits or antennas) or the transmission output according to, for example, a communication load. Specifically, in a case where a communication load between the base station device and the terminal device decreases, the base station device controls one or a plurality of wireless transceiver circuits to be in an OFF state, reduces the number of a plurality of antennas to be used, and reduces a transmission output of a wireless signal to be transmitted to the terminal device. That is, dynamic adaptation of the spatial elements or adaptation of the transmission power according to the communication load is achieved. As a result, power consumption of the base station device is saved while preventing a throughput loss. Hereinafter, the adaptation of the spatial elements and the adaptation of the transmission output may be referred to as adaptation of transmission parameters.

The base station device acquires, for example, a channel state information (CSI) report from the terminal device, and determines adaptation of transmission parameters, such as a spatial element and a transmission output, based on a state of a communication load. Next, the base station device performs appropriate adaptation of transmission parameters, and transmits a wireless signal to the terminal device with the adapted number of wireless transceiver circuits or the adapted transmission output. The CSI report is a report transmitted from the terminal device periodically or irregularly, and includes a measurement result when receiving a reference signal (CSI-RS) transmitted from the base station device.

In order to achieve adaptation of the spatial elements without delay, the base station device may transmit a plurality of types of CSI-RSs and acquire a plurality of types of CSI reports. The base station device transmits, for example, CSI-RSs corresponding to a different number of antenna ports (such as 32 antenna ports and 16 antenna ports), and acquires CSI reports corresponding to each of the different number of antenna ports. The base station device determines adaptation of the spatial elements based on content of the CSI report. In addition, for example, the base station device transmits CSI-RSs corresponding to the different transmission outputs, and acquires CSI reports corresponding to each of the different transmission outputs. The base station device determines adaptation of the transmission power based on content of the CSI report.

In a case of transmitting a plurality of types of CSI reports, for example, the terminal device can include, in one message, a plurality of types of measurement results and transmit the message to the base station device.

### CITATION LIST

### NON-PATENT LITERATURE

Non-Patent Literature 1: 3GPP TS 36.133 V17.7.0
Non-Patent Literature 2: 3GPP TS 36.211 V17.2.0
Non-Patent Literature 3: 3GPP TS 36.212 V17.1.0
Non-Patent Literature 4: 3GPP TS 36.213 V17.3.0
Non-Patent Literature 5: 3GPP TS 36.214 V17.0.0
Non-Patent Literature 6: 3GPP TS 36.300 V17.2.0
Non-Patent Literature 7: 3GPP TS 36.321 V17.2.0
Non-Patent Literature 8: 3GPP TS 36.322 V17.0.0
Non-Patent Literature 9: 3GPP TS 36.323 V17.1.0
Non-Patent Literature 10: 3GPP TS 36.331 V17.2.0
Non-Patent Literature 11: 3GPP TS 37.324 V17.0.0
Non-Patent Literature 12: 3GPP TS 37.340 V17.2.0
Non-Patent Literature 13: 3GPP TS 38.133 V17.7.0
Non-Patent Literature 14: 3GPP TS 38.201 V17.0.0
Non-Patent Literature 15: 3GPP TS 38.202 V17.2.0
Non-Patent Literature 16: 3GPP TS 38.211 V17.3.0
Non-Patent Literature 17: 3GPP TS 38.212 V17.3.0
Non-Patent Literature 18: 3GPP TS 38.213 V17.3.0
Non-Patent Literature 19: 3GPP TS 38.214 V17.3.0
Non-Patent Literature 20: 3GPP TS 38.215 V17.2.0
Non-Patent Literature 21: 3GPP TS 38.300 V17.2.0
Non-Patent Literature 22: 3GPP TS 38.321 V17.2.0
Non-Patent Literature 23: 3GPP TS 38.322 V17.1.0
Non-Patent Literature 24: 3GPP TS 38.323 V17.2.0
Non-Patent Literature 25: 3GPP TS 38.331 V17.2.0
Non-Patent Literature 26: 3GPP TS 38.420 V17.2.0
Non-Patent Literature 27: 3GPP TS 38.423 V17.2.0
Non-Patent Literature 28: RP-223540
Non-Patent Literature 29: 3GPP TR 38.864 V18.0.0

### SUMMARY OF INVENTION

### PROBLEMS TO BE SOLVED BY THE INVENTION

In the CSI report, in a case where a plurality of types of measurement results are transmitted in one message, a size of the message increases. For example, in a case where wireless resources for transmitting the CSI report are insufficient, the terminal device omits a part or the entirety of the CSI report and transmits the CSI report after omission to the base station device.

In a case where the CSI report after omission is received, there is a case where the base station device is not able to acquire information for determining adaptation of transmission parameters (for example, spatial elements, a transmission output, and the like). In this case, since the base station device is not able to receive the CSI report having a type for the determination, the base station device is not able to perform appropriate adaptation of the transmission parameters.

That is, there is no appropriate control method for allowing the terminal device to transmit the CSI report corresponding to the transmission parameters desired by the base station device when adaptation of the transmission parameters is performed.

One disclosure provides a base station device, a terminal device, and a wireless communication system that prevent adaptation of the transmission parameters from being disrupted due to omission of a part of the CSI report.

### MEANS FOR SOLVING THE PROBLEMS

A base station device that transmits a plurality of reference signals to a terminal device and receives measurement results of the plurality of reference signals from the terminal device, the base station device includes, a controller that notifies the terminal device of transmission information related to transmission of the plurality of reference signals, and a communicator that receives, from the terminal device, some or all of measurement results of the plurality of reference signals, the measurement results being transmitted according to a priority order determined based on the transmission information by the terminal device.

### ADVANTAGEOUS EFFECTS OF THE INVENTION

In one disclosure, it is possible to prevent adaptation of the transmission parameters from being disrupted due to omission of a part of the CSI report.

### BRIEF DESCRIPTION OF DRAWINGS

FIG. 1 is a diagram illustrating a configuration example of a wireless communication system 10.
FIG. 2 is a diagram illustrating a configuration example of the base station device 200.
FIG. 3 is a diagram illustrating a configuration example of the terminal device 100.
FIG. 4 is a diagram illustrating an example of a sequence of a CSI report.
FIG. 5 is a diagram illustrating an example of a sequence of a CSI report in the periodic method.
FIG. 6 is a diagram illustrating an example of a sequence of a CSI report in the semi-periodic method.
FIG. 7 is a diagram illustrating an example of a sequence of a CSI report in the aperiodic method.
FIG. 8 is a diagram illustrating an example of a priority order determination method according to the first method.
FIG. 9 is a diagram illustrating an example of a priority order determination method according to the second method.
FIG. 10 is a diagram illustrating an example of the parameter z other than the number of antenna ports.
FIG. 11 is a diagram illustrating an example of another expression.
FIG. 12 is a diagram illustrating an example of a table related to the parameter z.
FIG. 13 is a diagram illustrating an example of a sequence of a method of designating priority order determination processing.
FIG. 14 is a diagram illustrating an example of a sequence of a method of designating the priority order determination processing that is preset.
FIG. 15 is a diagram illustrating an example of a definition related to the priority order determination processing method.
FIG. 16 is a diagram illustrating an example of definitions of the parameter z and AlfaList.
FIG. 17 is a diagram illustrating an example of definitions related to configuration of a CSI report.
FIG. 18 is a diagram illustrating an example of a table related to the priority order.
FIG. 19 is a diagram illustrating an example of definitions of the priority order and BetaList.
FIG. 20 is a diagram illustrating an example of definitions related to configuration of a CSI report.
FIG. 21 is a diagram illustrating an example of definition of associated ReportConfigInfoList.
FIG. 22 is a diagram illustrating a description example of a specification.

### DESCRIPTION OF EMBODIMENTS

### [First Embodiment]

A first embodiment will be described.

### <Wireless Communication System 10>

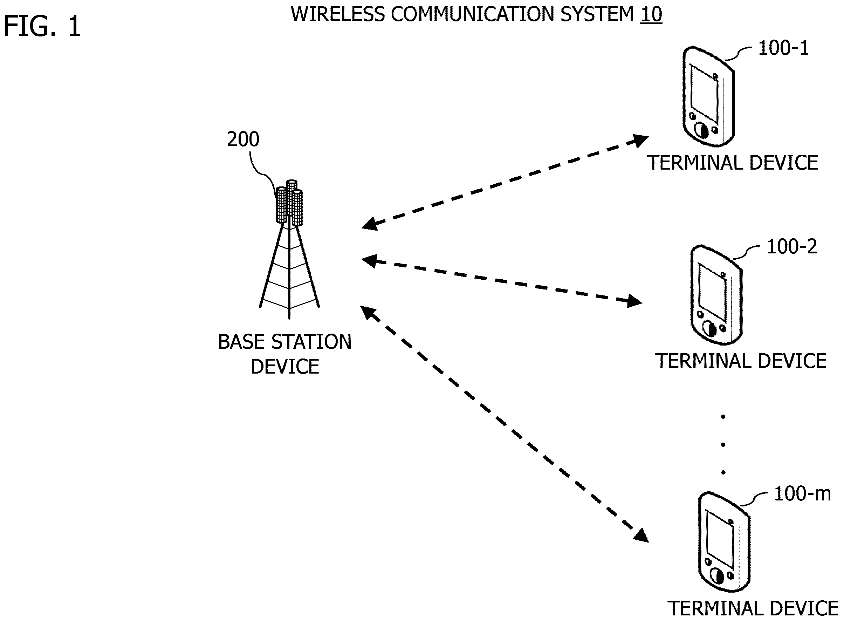

FIG. 1 is a diagram illustrating a configuration example of a wireless communication system 10. The wireless communication system 10 includes a base station device 200 and terminal devices 100-1 to 100-m. The wireless communication system 10 is, for example, a communication system corresponding to adaptation of spatial elements.

The base station device 200 is a device that is wirelessly connected to the terminal devices 100-1 to 100-m and performs wireless communication, and is, for example, an eNodeB or a gNodeB. The base station device 200 may be configured by one device, or may be configured by a plurality of devices such as a central unit (CU) and a distributed unit (DU).

The terminal devices 100-1 to 100-m (hereinafter, may be referred to as terminal devices 100) are communication devices that are wirelessly connected to the base station device 200 and transmit and receive data, and are, for example, smartphones or tablet terminals.

In the wireless communication system 10, the base station device 200 determines adaptation of data transmission parameters (for example, spatial elements, transmit power, and the like) according to the received CSI report. The base station device 200 controls the CSI report transmitted by the terminal device 100. The base station device 200 transmits the CSI-RS measured by the terminal device 100. The terminal device 100 receives the CSI-RS, measures a wireless signal, includes the measurement result in a CSI report, and transmits the CSI report to the base station device 200.

In a case where the CSI report is received, the base station device 200 determines adaptation of the transmission parameters, and for example, turns on/off the wireless transceiver circuits or changes the transmission output.

### <Configuration Example of Base Station Device 200>

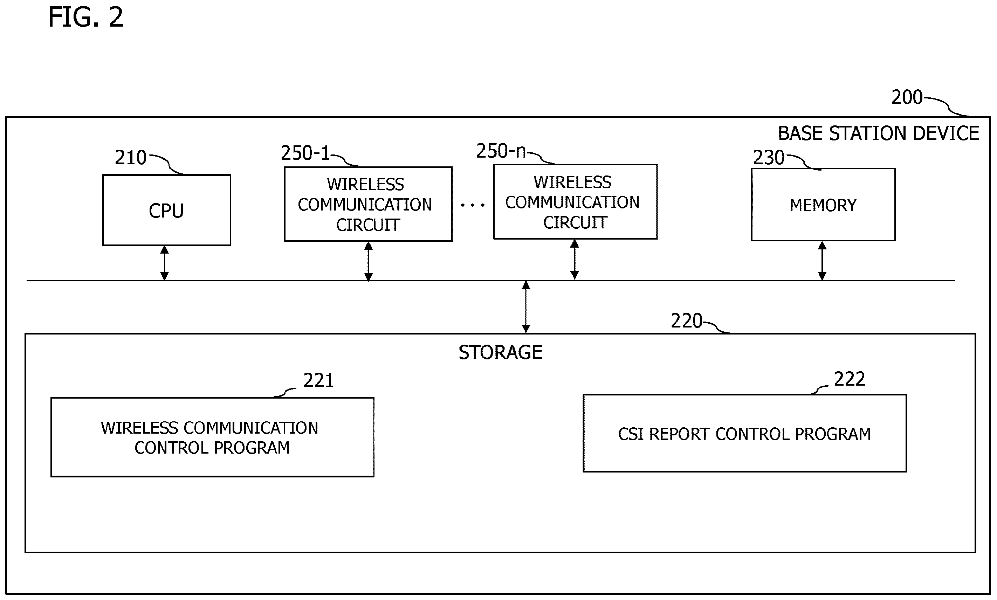

FIG. 2 is a diagram illustrating a configuration example of the base station device 200. The base station device 200 includes a central processing unit (CPU) 210, a storage 220, a memory 230, and wireless communication circuits 250-1 to 250-n.

The storage 220 is an auxiliary storage device such as a flash memory, a hard disk drive (HDD), or a solid state drive (SSD) that stores programs and data. The storage 220 stores a wireless communication control program 221 and a CSI report control program 222.

The memory 230 is an area where a program stored in the storage 220 is loaded. The memory 230 may also be used as an area where a program stores data.

The wireless communication circuits 250-1 to 250-n (hereinafter, may be referred to as wireless communication circuits 250) are devices that perform wireless communication with the terminal device 100. The base station device 200 transmits and receives signals (messages) to and from the terminal device 100 via the wireless communication circuits 250. In addition, the wireless communication circuit 250 is, for example, a wireless transceiver circuit and has an antenna port. The base station device 200 controls the number of antenna ports to be used for communication by turning on/off the wireless communication circuit 250.

The CPU 210 is a processor that loads a program stored in the storage 220 into the memory 230, executes the loaded program, constructs each unit, and implements each processing.

The CPU 210 performs wireless communication control processing by executing the wireless communication control program 221 to construct a communication unit. The wireless communication control processing is processing of controlling the transmission output and the wireless communication with the terminal device 100. In the wireless communication control processing, the base station device 200 performs wireless connection with the terminal device 100, and transmits and receives a signal (message).

The CPU 210 executes the CSI report control program 222 to construct a control unit, and performs CSI report control processing. The CSI report control processing is processing of instructing the terminal device 100 to transmit a CSI report, transmitting a CSI-RS, and receiving the CSI report. In addition, in the CSI report control processing, the base station device 200 instructs a method for priority order determination processing or transmits a parameter for priority order determination in a case where a data amount of the CSI report exceeds an amount of wireless resources.

### <Configuration Example of Terminal Device 100>

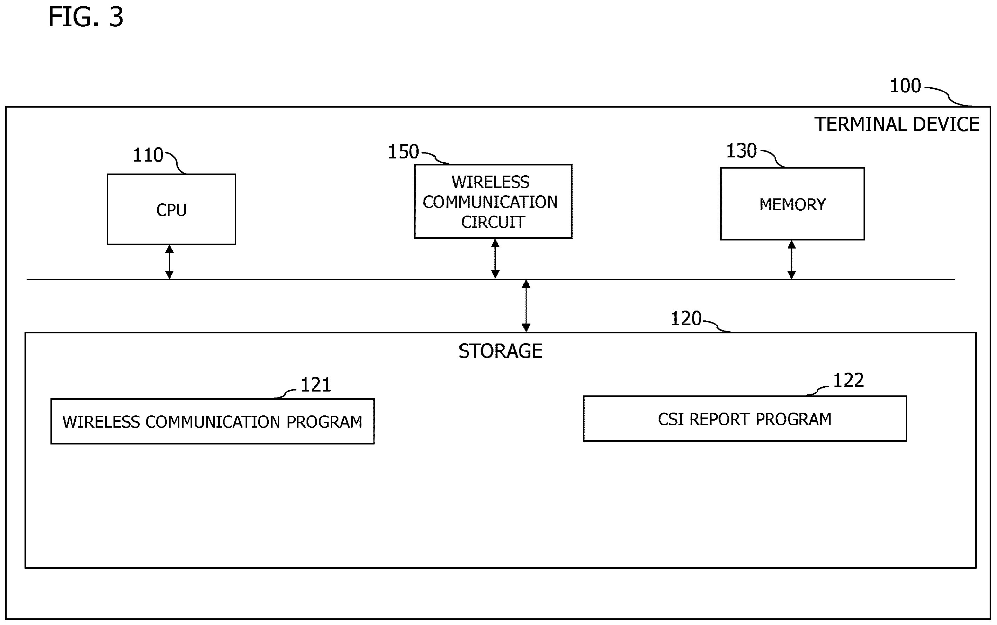

FIG. 3 is a diagram illustrating a configuration example of the terminal device 100. The terminal device 100 includes a CPU 110, a storage 120, a memory 130, and a wireless communication circuit 150.

The storage 120 is an auxiliary storage device such as a flash memory, an HDD, or an SSD that stores programs and data. The storage 120 stores a wireless communication program 121 and a CSI report program 122.

The memory 130 is an area where a program stored in the storage 120 is loaded. The memory 130 may also be used as an area where a program stores data.

The wireless communication circuit 150 is a device that performs wireless communication with the base station device 200. The terminal device 100 transmits and receives a signal (message) to and from the base station device 200 via the wireless communication circuit 150.

The CPU 110 is a processor that loads a program stored in the storage 120 into the memory 130, executes the loaded program, constructs each unit, and implements each processing.

The CPU 110 performs wireless communication processing by executing the wireless communication program 121 to construct a terminal communication unit. The wireless communication processing is processing of performing wireless communication with the base station device 200. In the wireless communication processing, the terminal device 100 performs wireless connection with the base station device 200, and transmits and receives a signal (message).

The CPU 110 executes the CSI report program 122 to construct a processing unit, and perform CSI report processing. The CSI report processing is processing of receiving a CSI-RS, measuring the CSI-RS, and transmitting a CSI report according to an instruction from the base station device 200. In addition, in a case where the data amount of the CSI report exceeds the amount of wireless resources in the CSI report processing, the terminal device 100 determines a priority order, and transmits a CSI report in which a part or the entirety of data is omitted.

### <Outline of CSI Report>

The CSI report is a report including measurement results when the terminal device 100 receives the CSI-RS. The base station device 200 requests the terminal device 100 to transmit the CSI report in order to determine the optimum parameters for wireless signal transmission to the terminal device (hereinafter, may be referred to as downlink transmission). The CSI report includes, for example, the following measurement results (information elements) related to downlink transmission.
- RI (rank indicator)
- PMI (precoding matrix indicator)
- CQI (channel quality indicator)
- LI (Layer indicator)
- CRI (CSI-RS resource indicator)
- L1-RSRP (layer-1 Reference Signal Received Power)
- L1-SINR (layer-1 Signal to Interference & Noise Ratio)

In the CSI report, in a case where the number of the spatial elements or the transmission output changes, a measurement result may change. For example, in a case where the number of antenna ports changes, PMI, RI, CQI, CRI, and the like may change. In addition, in a case where the transmission output changes, RI, CQI, LI, LI-RSRP, L1-SINE, and the like may change.

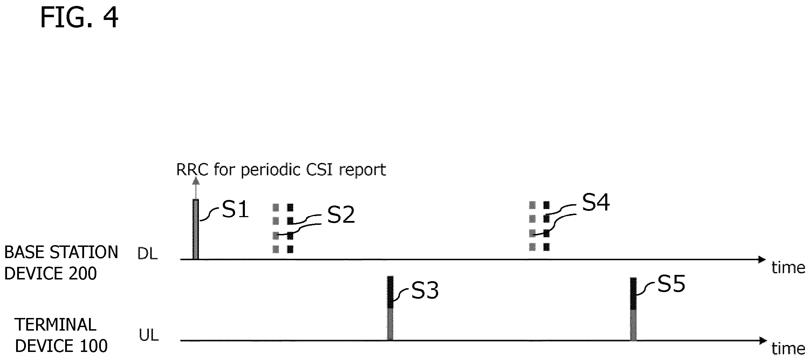

FIG. 4 is a diagram illustrating an example of a sequence of a CSI report. The CSI report of FIG. 4 is transmitted, for example, periodically. The base station device 200 transmits a setting message (for example, RRC for periodic CSI) including a setting (Config) of the CSI report to the terminal device 100 (S1). The terminal device 100 receives the setting message (S1), and stores the setting of the CSI report.

The base station device 200 transmits the CSI-RS to the terminal device 100 (S2). The CSI-RS is transmitted according to the number of types of measurement targets of the CSI report. For example, in a case where 16 antenna ports and 32 antenna ports are measurement targets, the base station device 200 transmits two CSI-RSs for each measurement. Note that the base station device 200 may include a plurality of CSI-RSs in one CSI-RS and transmit the CSI-RS.

When receiving the CSI-RS (S2), the terminal device 100 performs measurement in response to the signal reception, and transmits a CSI report to the base station device 200 (S3). The CSI report includes a plurality of types of CSI reports, for example, CSI reports for 16 antenna ports and 32 antenna ports. As illustrated in FIG. 4, the terminal device 100 can include a plurality of types of CSI reports in one message or one signal, and transmit the message or the signal to the base station device 200.

### <Method of Transmission and Reception of CSI Report>

For example, there are the following three methods for transmission and reception of the CSI report. Each of the methods will be described below.

### <1. Periodic CSI Reporting>

The periodic CSI reporting is a method in which the terminal device 100 periodically transmits a CSI report. In the following description, the method may be referred to as a periodic method.

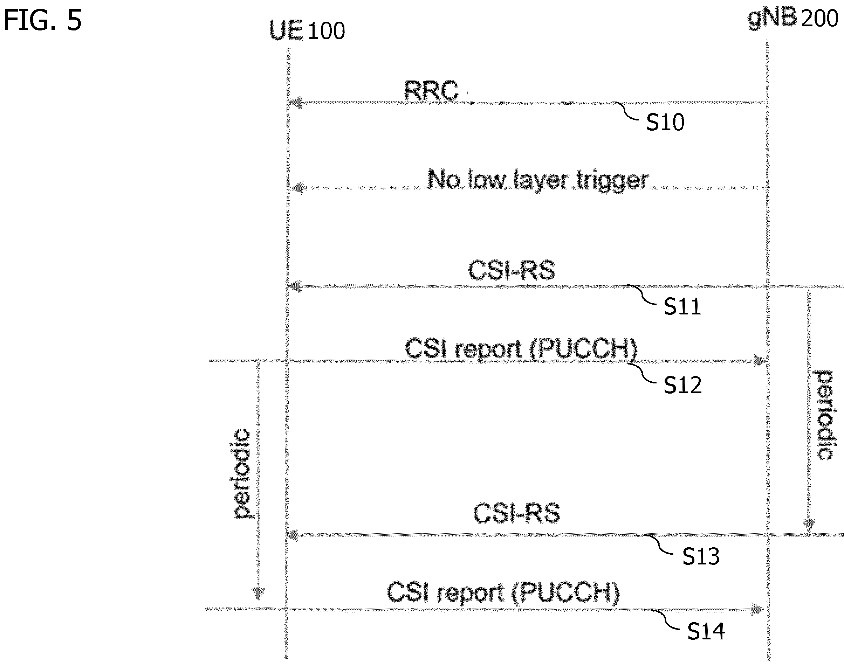

FIG. 5 is a diagram illustrating an example of a sequence of a CSI report in the periodic method. The base station device 200 (gNB) transmits RRC setup, RRC configuration, RRC reconfiguration, or RRC resume including the setting (config) related to the CSI report to the terminal device 100 (UE) (S10). The terminal device 100 receives and stores the setting (CSI setting) related to the CSI report. The CSI setting includes, for example, information related to the CSI-RS to be measured and information related to the content of the CSI report to be reported.

In the CSI report in the periodic method, a trigger for triggering transmission in a MAC layer or a PHY layer is not transmitted (No low layer trigger).

The base station device 200 transmits the CSI-RS to the terminal device 100 (S11). The base station device 200 transmits one or more types of CSI-RSs according to the information related to the CSI-RS included in the CSI setting.

When receiving the CSI-RS and performing measurement, the terminal device 100 transmits a CSI report to the base station device 200 (S12). The CSI report is transmitted by using, for example, PUCCH. In addition, for example, even in a case where a plurality of types of measurement results are requested, the CSI report is transmitted in one message.

Thereafter, the base station device 200 repeats transmission of the CSI-RS and reception of the CSI report at predetermined time intervals (periodic) (S13 and S14).

### <2. Semi-persistent CSI Reporting>

The semi-persistent CSI reporting is a method in which the terminal device 100 periodically transmits a CSI report in response to reception of a starting trigger from the base station device 200 until an ending trigger is received. In the following description, the method may be referred to as a semi-periodic method.

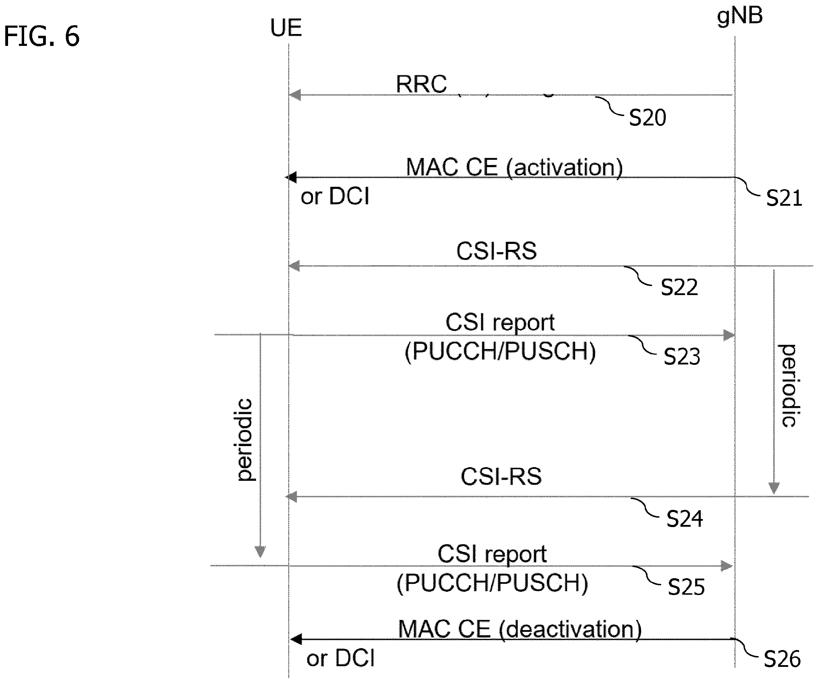

FIG. 6 is a diagram illustrating an example of a sequence of a CSI report in the semi-periodic method. The base station device 200 transmits RRC setup, RRC configuration, RRC reconfiguration, or RRC resume including the setting related to the CSI report to the terminal device 100 (S20). The terminal device 100 receives and stores the setting (CSI setting) related to the CSI report.

The base station device 200 transmits, for example, a MAC-CE including an indicator of activation to the terminal device 100, as a starting trigger for starting transmission of a CSI report (S21). When receiving the MAC-CE, the terminal device 100 waits for the CSI-RS and starts processing for the CSI report. Note that the base station device 200 may transmit DCI scrambled with SP_CSI_RNTI instead of the MAC-CE.

Note that, in a case where the DCI is used as the starting trigger of the semi-periodic method, there is a case where only one CSI report can be supported by one DCI. For example, in a case of triggering transmission of the CSI report for both 16 antenna ports and 32 antenna ports, the base station device 200 may transmit two pieces of DCI, that is, the DCI corresponding to the 16 antenna ports and the DCI corresponding to the 32 antenna ports.

The base station device 200 transmits the CSI-RS to the terminal device 100 (S22). The base station device 200 transmits one or more types of CSI-RSs according to the information related to the CSI-RS included in the CSI setting.

When receiving the CSI-RS and performing measurement, the terminal device 100 transmits a CSI report to the base station device 200 (S23). The CSI report is transmitted by using, for example, PUCCH or PUSCH.

Thereafter, the base station device 200 repeats transmission of the CSI-RS and reception of the CSI report at predetermined time intervals (S24 and S25).

Then, the base station device 200 transmits, to the terminal device 100, the MAC-CE including an indicator of deactivation which is an ending trigger for ending periodic transmission of the CSI report (S26). Note that the base station device 200 may transmit DCI scrambled with SP_CSI_RNTI instead of the MAC-CE. When receiving the ending trigger, the terminal device 100 ends waiting for the CSI-RS, and ends processing for the CSI report.

### <3. Aperiodic CSI Reporting>

The aperiodic CSI reporting is a method in which the terminal device 100 transmits a CSI report aperiodically (for example, once) in response to reception of an instruction to transmit a CSI report from the base station device 200. In the following description, the method may be referred to as an aperiodic method.

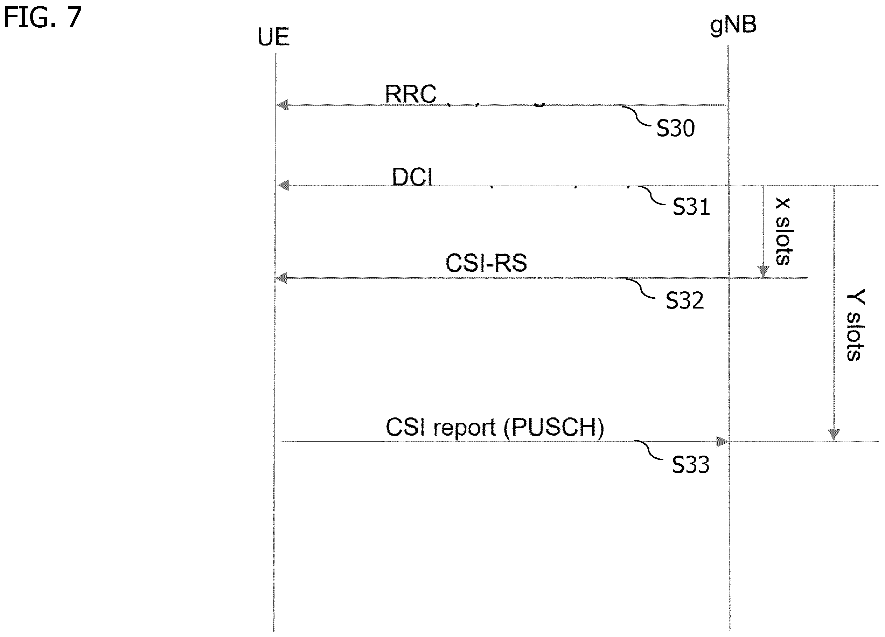

FIG. 7 is a diagram illustrating an example of a sequence of a CSI report in the aperiodic method. The base station device 200 transmits RRC setup, RRC configuration, RRC reconfiguration, or RRC resume including the setting related to the CSI report to the terminal device 100 (S30). The terminal device 100 receives and stores the setting (CSI setting) related to the CSI report.

The base station device 200 transmits, for example, a DCI including a CSI transmission request (CSI request) to the terminal device 100, as a transmission trigger of a CSI report (S31). When receiving the DCI, the terminal device 100 waits for the CSI-RS and performs processing for the CSI report.

For example, after X (X is an integer) slots elapsed, the base station device 200 transmits the CSI-RS to the terminal device 100 (S32). The base station device 200 transmits one or more types of CSI-RSs according to the information related to the CSI-RS included in the CSI setting.

For example, after Y (Y is an integer) slots elapsed, when receiving the CSI-RS and performing measurement, the terminal device 100 transmits a CSI report to the base station device 200 (S33). The CSI report is transmitted by using, for example, PUSCH.

When transmission and reception of the CSI report are completed, the base station device 200 and the terminal device 100 end the processing for the CSI report in the series of aperiodic method.

### <Priority Order Determination Processing>

As described above, for the CSI report, there is a case where a plurality of types of CSI reports are transmitted in one message regardless of the method. However, depending on the amount of wireless resources allocated to the terminal device 100, there is a case where transmission of the entirety of the CSI report is not allowed. Therefore, the terminal device 100 determines the priority order of each CSI report in the priority order determination processing, and may omit a part or the entirety of the data according to the priority order. In the following description, the priority order determination processing will be described.

### <1. First Method>

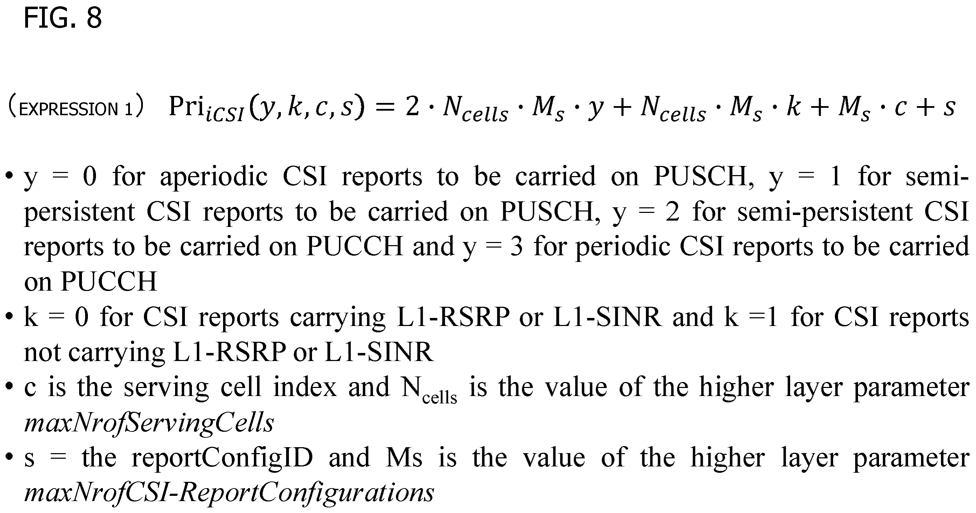

The first method is a priority order determination method that does not consider spatial elements. FIG. 8 is a diagram illustrating an example of a priority order determination method according to the first method.

For example, in a case where the CSI reports for 16 antenna ports and 32 antenna ports are requested and transmission of the CSI reports for both of 16 antenna ports and 32 antenna ports is not allowed due to a shortage of the wireless resources, the terminal device 100 determines the priority order by using Expression (1). Then, the terminal device 100 omits one of the 16 antenna ports or the 32 antenna ports according to the priority order, and transmits the CSI report.

The parameter y indicates the method for the CSI report. The aperiodic method using the PUSCH is set to 0. The semi-periodic method using the PUSCH is set to 1. The semi-periodic method using the PUCCH is set to 2. The periodic method using the PUSCCH is set to 3.

The parameter k is an element related to transmission of the CSI report. For the CSI report that transmits L1-RSRP or L1-SINR, 0 is set. For the CSI report that does not transmit L1-RSRP or L1-SINR, 1 is set.

The parameter c indicates an index of a serving cell.

Ncells indicates a value of maxNrofServingCells which is a RRC parameter. Note that the RRC parameter may be described as a higher layer parameter.

The parameter s indicates reportConfigID.

The parameter Ms indicates a value of maxNrofCSI-ReportConfigurations which is a RRC parameter.

In Expression 1, the priority order is calculated by multiplying each parameter by a coefficient and adding the multiplied value. For example, the priority order is higher as the value is larger.

### <2. Second Method>

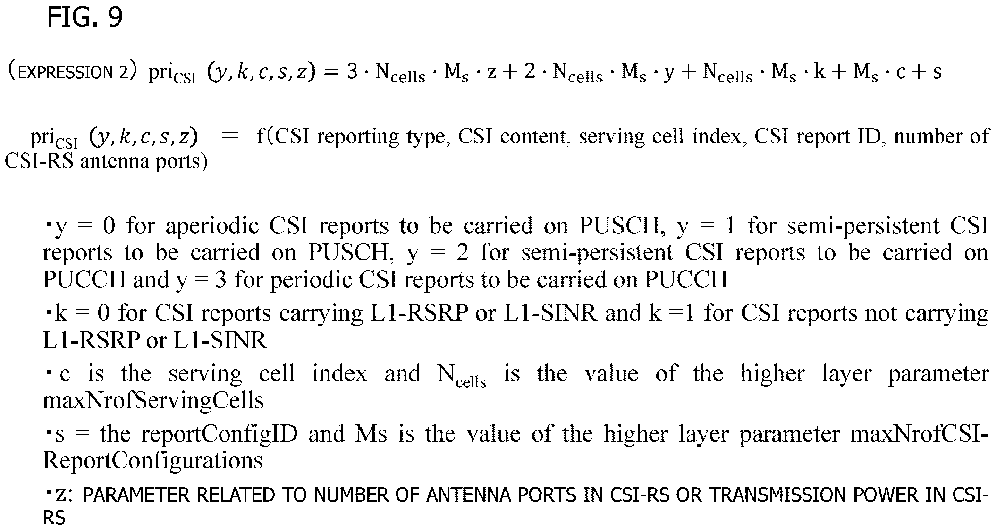

The second method is a priority order determination method that considers spatial elements. FIG. 9 is a diagram illustrating an example of a priority order determination method according to the second method. In Expression 2 in the second method, the parameter z related to the transmission parameter (for example, spatial elements, transmission output, and the like) is added to the parameters used in Expression 1.

The parameter z is a parameter related to the number of antenna ports or the transmission output in the CSI-RS transmitted by the base station device 200. In Expression 2, the parameter z is, for example, the number of antenna ports or a value related to the number of antenna ports (number of CSI-RS antenna ports).

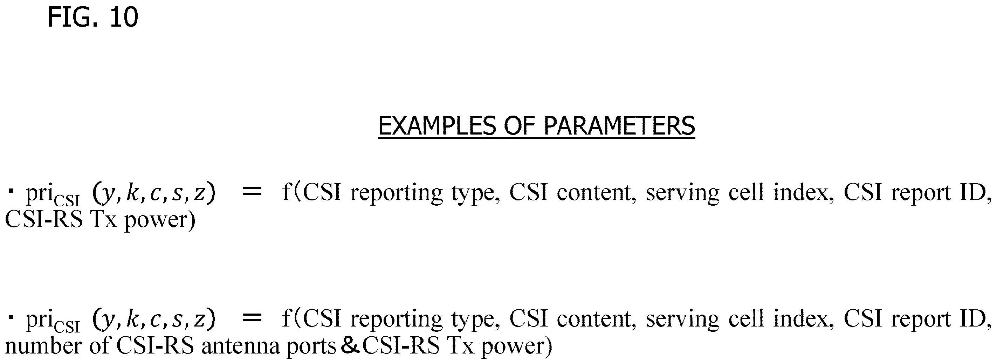

FIG. 10 is a diagram illustrating an example of the parameter z other than the number of antenna ports. The parameter z may be, for example, a value related to the transmission output (CSI-RS Tx power), an offset of the transmission output in the CSI-RS compared to a transmission output of a physical downlink shared channel (PDSCH), an offset of the transmission output in the CSI-RS compared to a transmission output of a secondary synchronization signal (SSS), or a total value (number of CSI-RS antenna ports & CSI-RS Tx power) of the number of antenna ports and the transmission output.

In Expression 2, the priority order is calculated by multiplying each parameter by a coefficient and adding the multiplied value. As in Expression 1, for example, the priority order is higher as the value is larger.

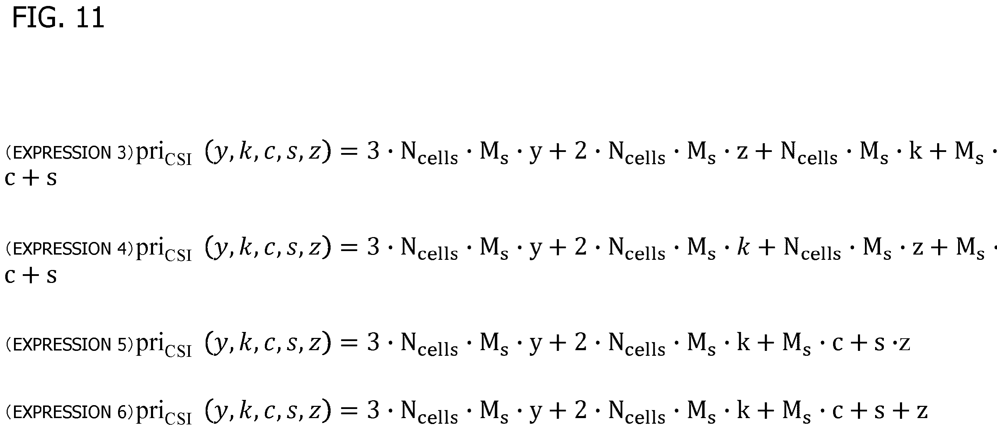

Note that Expression 2 is not limited to the expression illustrated in FIG. 9. FIG. 11 is a diagram illustrating an example of another expression. Expression 2 may be any one of Expression 3 to Expression 6 illustrated in FIG. 11. Expression 2 to Expression 6 are different in a method of using the parameter z.

For example, the base station device 200 selects the first method or the second method according to a degree of consideration (how much the transmission parameter is considered in determining the priority order) of the transmission parameter. Then, the base station device 200 notifies the terminal device 100 of the selected method.

For example, in a case where it is desired to measure an influence of the change in the transmission parameter, the base station device 200 selects the second method in consideration of the transmission parameter. Note that the base station device 200 may determine an expression for determining the priority order from, for example, some or all of Expression 1 to Expression 6.

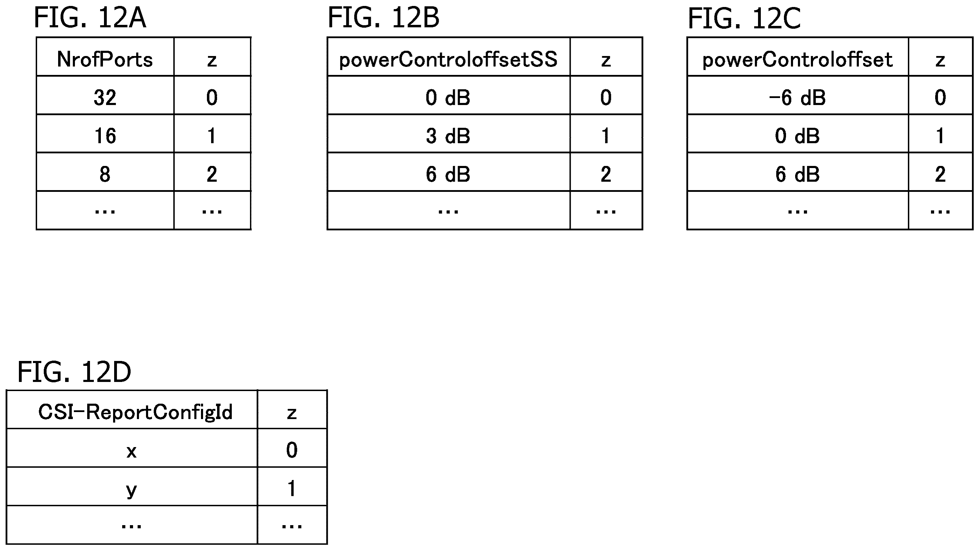

FIG. 12 is a diagram illustrating an example of a table related to the parameter z.

FIG. 12A is a diagram illustrating a relationship between the number of antenna ports and the parameter z. For example, as the number of antenna ports is larger, the value of the parameter z is smaller.

FIG. 12B is a diagram illustrating a relationship between the transmission output and the parameter z. The transmission output in FIG. 12B is, for example, an offset value of the transmission output in the CSI-RS compared to the SSS. As the offset value is larger, the value of the parameter z is smaller.

FIG. 12C is a diagram illustrating a relationship between the transmission output and the parameter z. The transmission output in FIG. 12C is, for example, an offset value of the transmission output in the CSI-RS compared to the PDSCH. As the offset value is larger, the value of the parameter z is smaller.

FIG. 12D is a diagram illustrating a relationship between an identifier of the CSI report and the parameter z. The identifier of the CSI report is an ID allocated for each type of the CSI report. The value of the parameter z is set according to the type of the CSI report.

### <Method for Designating Priority Order Determination Processing>

The base station device 200 instructs priority order determination processing for the terminal device 100. The instruction content includes, for example, information related to priority order determination (hereinafter, may be referred to as priority order information) such as information related to which priority order determination processing is used or information related to parameters in the priority order determination processing.

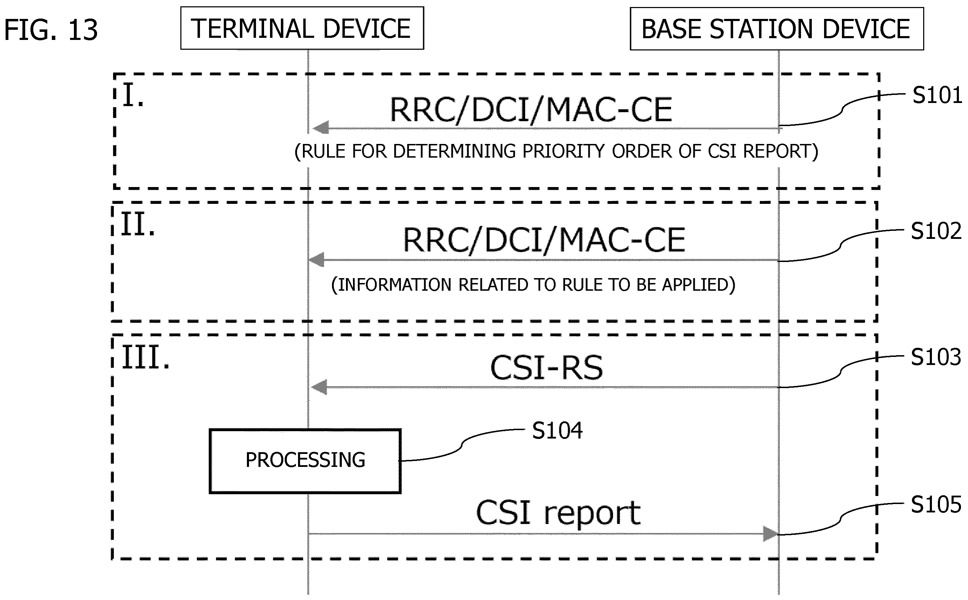

FIG. 13 is a diagram illustrating an example of a sequence of a method of designating priority order determination processing.

Step I is a step of setting, in the terminal device 100, a rule (priority order rule) for determining a priority order of the CSI report. The priority order rule includes, for example, a part or the entirety of the priority order information. The base station device 200 transmits the priority order rule to the terminal device 100 by using, for example, RRC, DCI, MAC-CE, or the like (S101).

Step II is a step of instructing a rule to be applied (application rule) for the terminal device 100. The application rule includes, for example, information indicating which of a plurality of priority order rules is to be effective, such as information indicating which method of the priority order rules is to be used to determine a priority order. The base station device 200 transmits the application rule to the terminal device 100 by using, for example, RRC, DCI, MAC-CE, or the like (S102). Note that, in a case where the application rule is designated in step I (in a case where the priority order determination processing is uniquely determined by the priority order rule), step II may be omitted.

Step III is a step in which the terminal device 100 measures the CSI-RS (S103), performs priority order determination processing according to the priority order rule and the application rule (S104), and transmits a CSI report (S105).

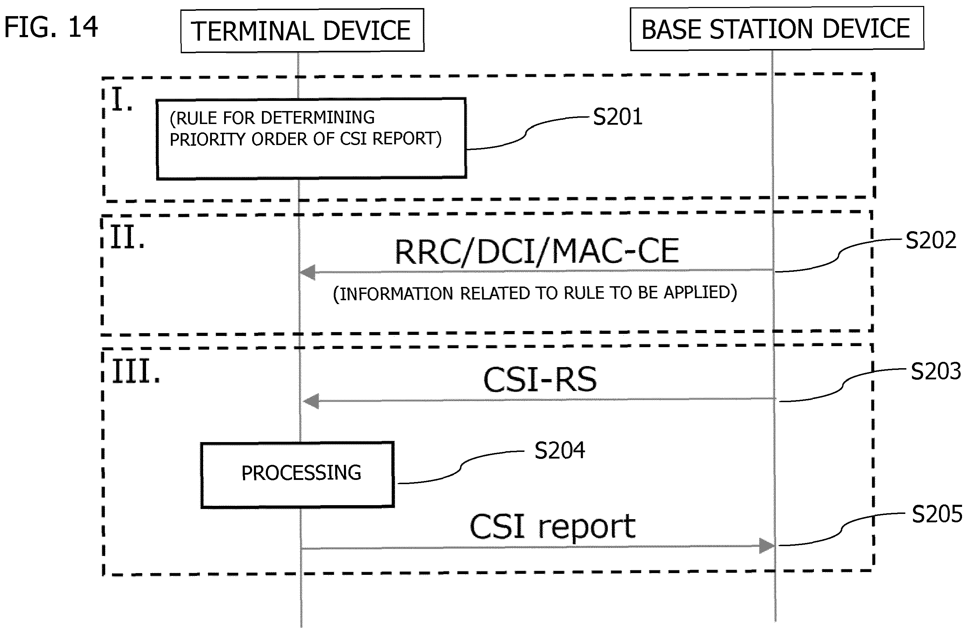

FIG. 14 is a diagram illustrating an example of a sequence of a method of designating the priority order determination processing that is preset. In the sequence of FIG. 14, the priority order rule in step I is set in the terminal device 100 in advance (S201). The step II, the step III, and each message (S202 to S205) are the same as those in FIG. 13.

### <Definition of Information Element>

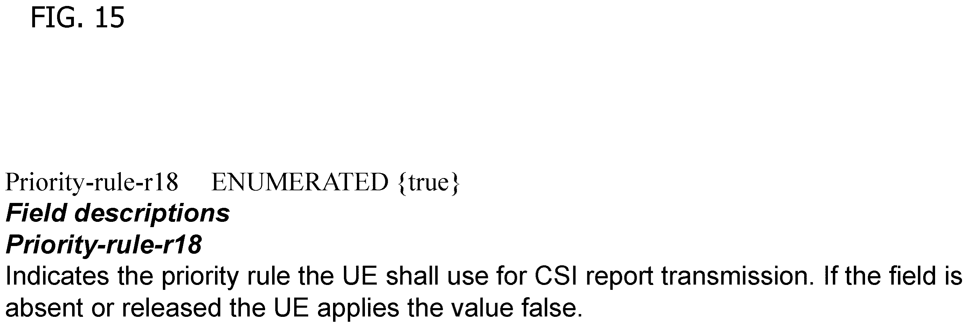

FIG. 15 is a diagram illustrating an example of a definition related to the priority order determination processing method. The Priority-rule-r18 indicates which of the first method and the second method is selected. In addition, for example, in a case where there are three or more methods for the priority order determination processing, the Priority-rule-r18 may indicate which one is selected.

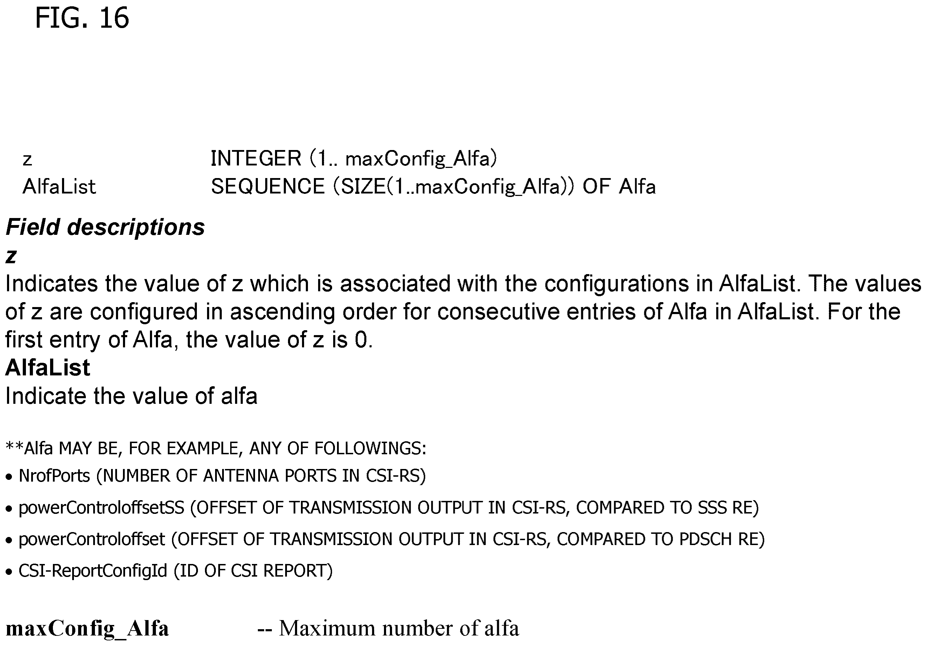

FIG. 16 is a diagram illustrating an example of definitions of the parameter z and AlfaList. Alfa may be, for example, the number of antenna ports in the CSI-RS, the offset of the transmission output in the CSI-RS compared to the SSS, the offset of the transmission output in the CSI-RS compared to the PDSCH, or the ID of the CSI report.

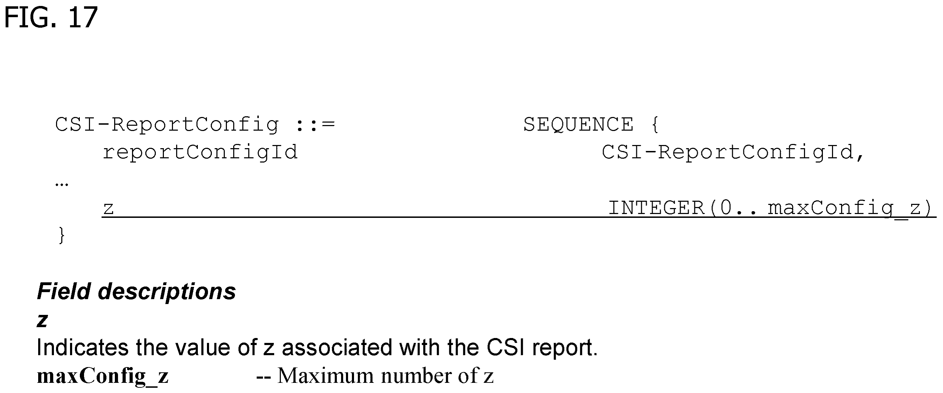

FIG. 17 is a diagram illustrating an example of definitions related to configuration of a CSI report. The definition of the parameter z is added to CSI-ReportConfig.

### <Example of Sequence of Method of Designating Priority Order Determination Processing>

In the following description, a case where there is a pre-setting and a case where there is no pre-setting will be described.

### <1. Case where there is Pre-Setting>

A case where there is a pre-setting will be described using, for example, the sequence of the periodic method in FIG. 5.

The terminal device 100 has a priority order rule which is set in advance (step I in FIG. 14).

The base station device 200 transmits RRC setup, RRC configuration, RRC reconfiguration, or RRC resume including the application rule to the terminal device 100 (S10, step II in FIG. 14).

The application rule includes, for example, the priority order determination processing method and the parameter z. For example, the base station device 200 notifies the terminal device 100 of the priority order determination method by using the definition of FIG. 15. In addition, the base station device 200 notifies the terminal device 100 of the parameter z by using, for example, the definition of FIG. 16 or FIG. 17.

The terminal device 100 receives the application rule (S10), and stores the application rule. The base station device 200 transmits the CSI-RS to the terminal device 100 (S11, step III of FIG. 14). The base station device 200 transmits, for example, a CSI-RS for 16 antenna ports and 32 antenna ports. In addition, the base station device 200 transmits, for example, a CSI-RS for a -6 dB output offset and a 0 dB output offset compared to the PDSCH.

When receiving the CSI-RS and performing measurement, the terminal device 100 creates a CSI report. In a case where transmission of all items of the created CSI report is not allowed due to, for example, a shortage of wireless resources or the like, the terminal device 100 performs the priority order determination processing. Which priority order determination processing is performed depends on the application rule.

The terminal device 100 transmits the CSI report to the base station device 200 (S12). For example, the terminal device 100 omits the CSI report for the 16 antenna ports with a low priority order, and transmits only the CSI report for the 32 antenna ports to the base station device 200. In addition, for example, the terminal device 100 omits the CSI report for the -3 dB output offset with a low priority order, and transmits only the CSI report for the 0 dB output offset to the base station device 200.

Thereafter, the base station device 200 repeats transmission of the CSI-RS and reception of the CSI report at predetermined time intervals (S13 and S14). In a case where transmission of all of the CSI reports is not allowed in the periodic transmission of the CSI report, the terminal device 100 performs the priority order determination processing, omits some or all of the CSI reports, and transmits the CSI report after omission.

Note that, in the semi-periodic method and the aperiodic method, the same designation method is used. In the semi-periodic method, for example, processing of S20 in FIG. 6 corresponds to processing of S10 in FIG. 5. Further, in the aperiodic method, for example, processing of S30 in FIG. 7 corresponds to processing of S10 in FIG. 5.

### <2. Case where there is No Pre-Setting>

A case where there is no pre-setting will be described using, for example, the sequence of the periodic method in FIG. 5.

The base station device 200 transmits RRC setup, RRC configuration, RRC reconfiguration, or RRC resume including the priority order rule to the terminal device 100 (S10, step I in FIG. 13).

The priority order rule includes, for example, one priority order determination processing method to be used and the parameter z. Note that, in a case where the terminal device 100 supports only one priority order determination processing method, the priority order determination processing method may be omitted. For example, the base station device 200 notifies the terminal device 100 of the priority order determination method by using the definition of FIG. 15. In addition, the base station device 200 notifies the terminal device 100 of the parameter z by using, for example, the definition of FIG. 16 or FIG. 17.

The terminal device 100 receives the priority order rule (S10), and stores the priority order rule. Note that step II in FIG. 13 is omitted. The reason is that designation corresponding to the application rule is performed in step I.

The base station device 200 transmits the CSI-RS to the terminal device 100 (S11, step III of FIG. 13). The base station device 200 transmits, for example, a CSI-RS for 16 antenna ports and 32 antenna ports. In addition, the terminal device 100 transmits, for example, a CSI-RS for a -6 dB output offset and a 0 dB output offset compared to the PDSCH. Thereafter, processing similar to the processing in the case where there is pre-setting is performed.

Note that, in the semi-periodic method and the aperiodic method, the same designation method is used. In the semi-periodic method, for example, processing of S20 in FIG. 6 corresponds to processing of S10 in FIG. 5. Further, in the aperiodic method, for example, processing of S30 in FIG. 7 corresponds to processing of S10 in FIG. 5. In this case, step II is omitted as in the periodic method.

Further, in the semi-method and the aperiodic method, for example, the setting corresponding to the pre-setting may be transmitted to the terminal device 100 in processing of S20 in FIG. 6 and processing of S30 in FIG. 7. In this case, the processing of step II is performed in processing of S21 in FIG. 6 in the semi-periodic method and in processing of S31 in the aperiodic method. The application rule is similar to, for example, the rule in the case where there is a pre-setting.

Note that, when the rule and the parameter are notified by using the DCI or the MAC_CE, a new DCI format or a new MAC_C format may be defined. In addition, a field may be added to the format of the DCI or the MAC_CE. In addition, a new RNTI may be defined, and notification may be performed by using the new RNTI. The DCI and the MAC_CE may use a DCI or an MAC_CE that triggers a CSI report in the semi-periodic method or the aperiodic method, or may use a DCI or an MAC_CE indicating that the base station device 200 enters a power saving state (that is, a state in which adaptation of the spatial elements is applied or adaptation of the transmission power is applied).

### [Second Embodiment]

A second embodiment will be described. In the second embodiment, the base station device 200 directly designates the priority order instead of the parameter z.

In the second embodiment, the terminal device 100 does not calculate the priority order by the priority order determination processing. The terminal device 100 uses the priority order acquired from the base station device 200 as it is, and omits the CSI report.

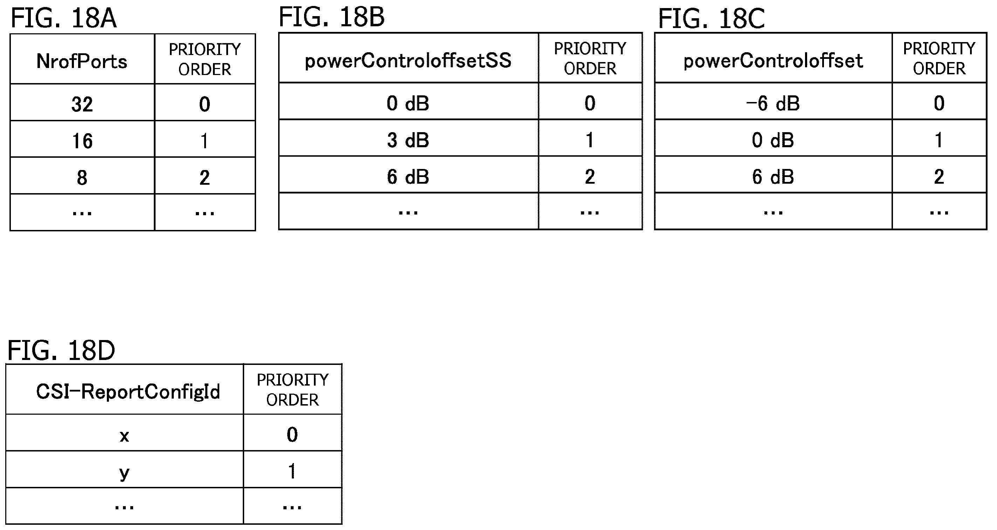

FIG. 18 is a diagram illustrating an example of a table related to the priority order.

FIG. 18A is a diagram illustrating a relationship between the number of antenna ports and the priority order. For example, as the number of antenna ports is larger, a value of the priority order is smaller (the priority order is higher).

FIG. 18B is a diagram illustrating a relationship between the transmission output and the priority order. The transmission output in FIG. 12B is, for example, an offset value of the transmission output compared to the SSS. As the offset value is larger, the value of the priority order is smaller (the priority order is higher).

FIG. 18C is a diagram illustrating a relationship between the transmission output and the priority order. The transmission output in FIG. 12C is, for example, an offset value of the transmission output compared to the PDSCH. As the offset value is larger, the value of the priority order is smaller (the priority order is higher).

FIG. 18D is a diagram illustrating a relationship between an identifier of the CSI report and the priority order. The identifier of the CSI report is an ID allocated for each type of the CSI report. The value of the priority order is set according to the type of the CSI report.

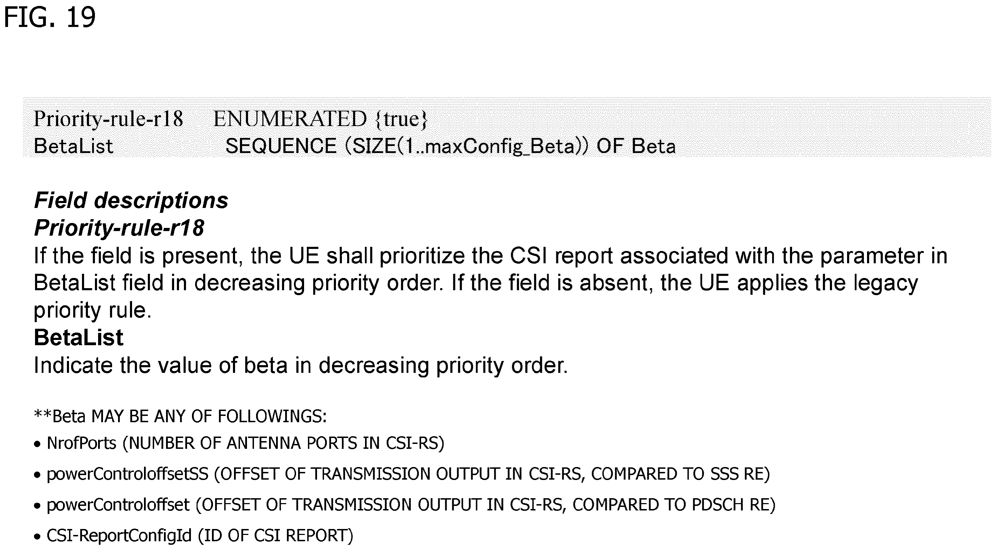

FIG. 19 is a diagram illustrating an example of definitions of the priority order and BetaList. Beta may be, for example, the number of antenna ports in the CSI-RS, the offset of the transmission output in the CSI-RS compared to the SSS, the offset of the transmission output in the CSI-RS compared to the PDSCH, or the ID of the CSI report.

The base station device 200 uses the definitions illustrated in FIG. 19 instead of the definitions illustrated in FIG. 16.

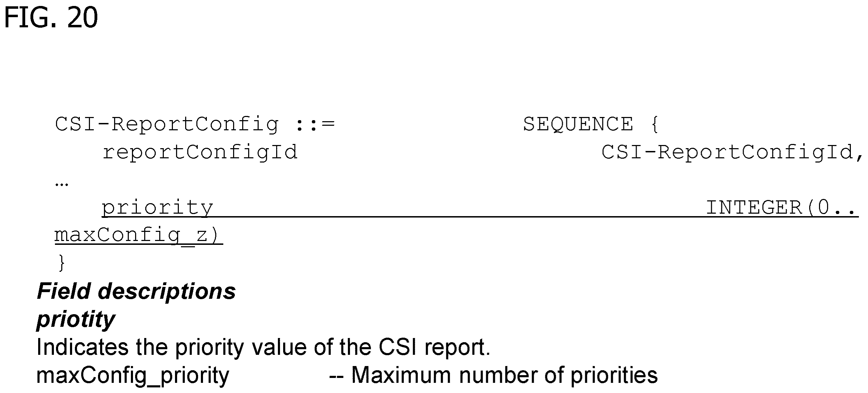

FIG. 20 is a diagram illustrating an example of definitions related to configuration of a CSI report. The definition of the priority order is added to CSI-ReportConfig.

The base station device 200 uses the definitions illustrated in FIG. 20 instead of the definitions illustrated in FIG. 17.

### [Third Embodiment]

For example, in the semi-periodic method, there is a case where triggering of a plurality of CSI reports is not performed by using one DCI0_1. In this case, a plurality of pieces of DCI0_1 may be transmitted, and a delay may occur in the transmission of the trigger. As a result, an event in which a CSI report is not received by the base station device 200 at an appropriate timing may occur. Therefore, in the semi-periodic method, an information element for triggering a starting of each of a plurality of CSI reports by using one piece of DCI0_1 is defined as follows.

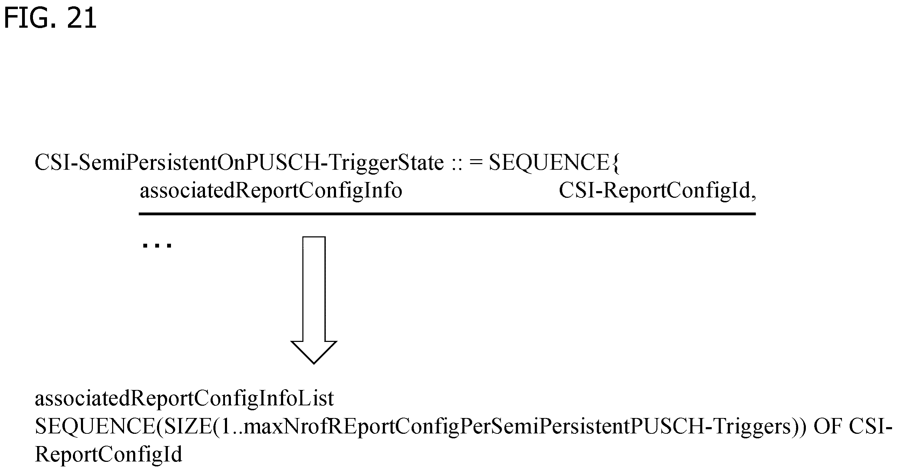

FIG. 21 is a diagram illustrating an example of definition of associatedReportConfigInfoList. For example, instead of the configuration of the single associatedReportConfigInfo in the semi-periodic method illustrated at the upper portion, the associatedReportConfigInfoList obtained by performing listing of the associatedReportConfigInfo is defined.

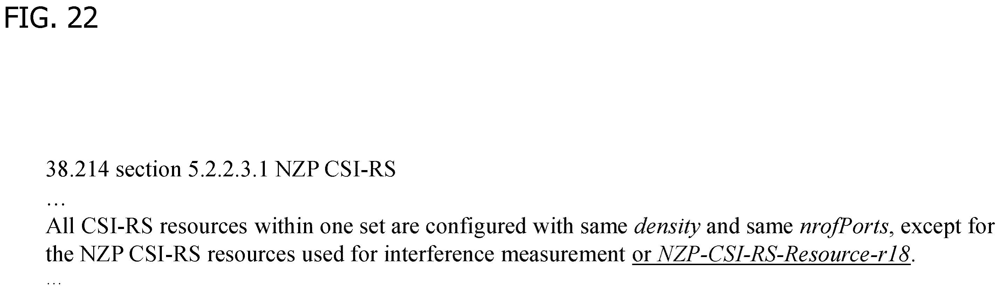

FIG. 22 is a diagram illustrating a description example of a specification. FIG. 22 describes that limitations in the specification exclude NZP-CSI-RS-Resource-r18. That is, the CSI-RS resources belonging to one set defined in the NZP-CSI-RS-Resource-r18 can be configured with different numbers of antenna ports.

### [Other Embodiments]

The above-described embodiments may be used in combination. For example, the base station device 200 and the terminal device 100 may have a common table for the parameter z and the priority order, and the parameter z and the priority order may be notified using an index of the table or the like.

In addition, the setting of the priority order rule and the setting of the application rule may partially overlap each other, or a part of one rule may be set by the other rule. For example, all of the content that is set by the priority order rule and the content that is set by the application rule may be set in any message or in pre-setting, and all of pieces of information used in the priority order processing method or the priority order calculation using the expression may be set in any rule or in pre-setting.

In addition, in the method of instructing the priority order processing method without pre-setting, for example, content corresponding to the pre-setting may be notified by a message other than the RRC message. In addition, the application rule may be set in a message other than the RRC message, the DCI, and the MAC CE. The message names in the present embodiment are an example, and the message names and the properties (layers to be managed and the like) are not limited to the messages described in the embodiment.

### REFERENCE SIGNS LIST

10: WIRELESS COMMUNICATION SYSTEM
100: TERMINAL DEVICE
110: CPU
120: STORAGE
121: WIRELESS COMMUNICATION PROGRAM
122: CSI REPORT PROGRAM
130: MEMORY
150: WIRELESS COMMUNICATION CIRCUIT
200: BASE STATION DEVICE
210: CPU
220: STORAGE
221: WIRELESS COMMUNICATION CONTROL PROGRAM 222: CSI REPORT CONTROL PROGRAM
230: MEMORY
250: WIRELESS COMMUNICATION CIRCUIT

## Claims

1. A base station device that transmits a plurality of reference signals to a terminal device and receives measurement results of the plurality of reference signals from the terminal device, the base station device comprising:
a controller that notifies the terminal device of transmission information related to transmission of the plurality of reference signals; and
a communicator that receives, from the terminal device, some or all of measurement results of the plurality of reference signals, the measurement results being transmitted according to a priority order determined based on the transmission information by the terminal device.

2. The base station device according to claim 1, wherein
the transmission information includes information according to the number of antenna ports when transmitting each of the plurality of reference signals.

3. The base station device according to claim 1, wherein
the transmission information includes information according to a transmission output when transmitting each of the plurality of reference signals.

4. The base station device according to claim 1, wherein
the transmission information includes information according to transmission output and the number of antenna ports when transmitting each of the plurality of reference signals.

5. The base station device according to claim 1, wherein
the controller selects one of a plurality of priority order determination methods, and notifies the terminal device of the selected priority order determination method.

6. The base station device according to claim 5, wherein
the plurality of priority order determination methods includes a method that does not consider the transmission information.

7. A terminal device that receives a plurality of reference signals from a base station device and transmits measurement results of the plurality of reference signals to the base station device, the terminal device comprising:
a terminal communicator that receives transmission information related to transmission of the plurality of reference signals from the base station device; and
a processor that determines a priority order of each of the measurement results of the plurality of reference signals according to the transmission information and transmits some or all of the measurement results of the plurality of reference signals to the base station device.

8. A wireless communication system comprising:
a base station device that transmits a plurality of reference signals to a terminal device; and the terminal device that transmits measurement results of the plurality of reference signals, wherein
the base station device is configured to transmit transmission information related to transmission of the plurality of reference signals to the terminal device, and
the terminal device is configured to receive the transmission information, determine a priority order of each of measurement results of the plurality of reference signals according to the transmission information, and transmit some or all of the measurement results of the plurality of reference signals to the base station device.
